# FASCICULE DE BREVET EUROPEEN

(11) **EP 1 592 498 B1**
(45) Date de publication et mention de la délivrance du brevet: **12.08.2009**
(21) Numéro de dépôt: 04708794.5
(22) Date de dépôt: 06.02.2004
(51) Int. Cl.: B01D 53/64

(54) **PROCEDE ET DISPOSITIF DE CAPTURE DE RUTHENIUM PRESENT DANS UN EFFLUENT GAZEUX**
VERFAHREN UND VORRICHTUNG ZUM EINFANGEN VON IN ABGASEN ENTHALTENEM RUTHENIUM
METHOD AND DEVICE FOR CAPTURING RUTHENIUM PRESENT IN A GASEOUS EFFLUENT

(30) Priorité: 10.02.2003 FR 0301538
(43) Date de publication de la demande: 09.11.2005
(73) Titulaire: COMPAGNIE GENERALE DES MATIERES NUCLEAIRES, 78140 Velizy Villacoublay (FR)
(72) Inventeur: COURTAUD, Bruno, F-87300 Bellac (FR); MOREL, Fabrice, F-50340 Les Pieux (FR); PAGIS, Georges, F-50130 Cherbourg-Octeville (FR); REDONNET, Carol, F-50120 Equeurdreville (FR)
(74) Mandataire: Poulin, Gérard
(86) Numéro de dépôt international: PCT/FR2004/050049
(87) Numéro de publication internationale: WO 2004/071640

(56) Documents cités:
- EP-A- 0 559 536
- WO-A-01/07147
- PATENT ABSTRACTS OF JAPAN vol. 016, no. 305 (P-1380), 6 juillet 1992 (1992-07-06) & JP 04 083199 A (TOSHIBA CORP), 17 mars 1992 (1992-03-17)
- PATENT ABSTRACTS OF JAPAN vol. 013, no. 049 (C-565), 3 février 1989 (1989-02-03) & JP 63 243232 A (ISHIKAWAJIMA HARIMA HEAVY IND CO LTD), 11 octobre 1988 (1988-10-11)
- PATENT ABSTRACTS OF JAPAN vol. 009, no. 228 (C-303), 13 septembre 1985 (1985-09-13) & JP 60 087855 A (KOGYO GIJUTSUIN;OTHERS: 0J), 17 mai 1985 (1985-05-17)
- DATABASE WPI Section Ch, Week 198508 Derwent Publications Ltd., London, GB; Class A97, AN 1985-049423 XP002257639 & SU 1 106 529 A (TIN IND RES INST) 7 août 1984 (1984-08-07)
- PATENT ABSTRACTS OF JAPAN vol. 008, no. 130 (C-229), 16 juin 1984 (1984-06-16) & JP 59 042020 A (KANAGAWAKEN), 8 mars 1984 (1984-03-08)

## Description

### DOMAINE TECHNIQUE

La présente invention se rapporte à un procédé et à un dispositif de capture de ruthénium présent dans un effluent gazeux.

Elle trouve en particulier une application dans la filtration des effluents gazeux issus du retraitement des combustibles nucléaires et contenant ou susceptibles de contenir du ruthénium.

Le ruthénium est un des produits de la fission de l'atome générés lors de la réaction nucléaire. A ce titre, on le retrouve dans les barreaux de combustibles irradiés. Il représente 6% massique de l'ensemble des produits de fission et ses isotopes ¹⁰³Ru et ¹⁰⁶Ru sont radioactifs.

Dans les procédés de traitement des combustibles nucléaires, les barreaux de combustibles sont tout d'abord cisaillés et dissous dans de l'acide nitrique. La plupart des composés constituant les barreaux, y compris le ruthénium, passent alors en solution sous forme nitrates. Cette solution de dissolution est dirigée par la suite vers les ateliers d'extraction liquide-liquide. Le ruthénium est présent à cette étape du procédé dans la phase aqueuse nommée solution de produits de fission (PF). Cette solution est envoyée vers les ateliers de vitrification où elle est calcinée dans un four et les éléments sous forme d'oxydes en résultant sont ensuite vitrifiés.

Ainsi, le ruthénium, comme les autres radioéléments est vitrifié. Malheureusement, la forme oxyde RuO₄ est extrêmement volatile et bien que piégée par le traitement des effluents gazeux issus de ces procédés, une fraction, certes infime, est susceptible de s'échapper notamment par les éventuelles fuites du circuit de traitement.

Le ruthénium sous cette forme gazeuse RuO₄ peut alors être transféré dans la ventilation bâtiment et passer dans les gaines de ventilation. Il traverse alors toutes les barrières de filtration des systèmes de ventilation. Il se trouve alors à la cheminée de première catégorie et est rejeté à l'environnement.

A ce jour, dans la plupart des installations de retraitement des combustibles irradiés, les effluents gazeux issus des cellules émettant du ruthénium traversent un ensemble de deux filtres qui les débarrassent des plus grosses particules et empêchent un colmatage trop rapide des étages de filtration suivants. Ils traversent ensuite les filtres de première et deuxième barrières placés dans des caissons blindés.

C'est notamment sur ces éléments filtrants que, de préférence, peut être adjointe la présente invention qui constitue un moyen très efficace de lutte contre les rejets de ruthénium.

### ETAT DE LA TECHNIQUE ANTERIEURE

Lorsque le ruthénium est sous forme de RuO₂ solide, il est relativement simple de le piéger en utilisant une filtration absolue. C'est le cas actuellement sur les ateliers de vitrification qui possèdent plusieurs barrières de filtration sur leurs systèmes de ventilation. Les filtres de très haute efficacité (THE) des premières, deuxièmes et troisièmes barrières ne laissent pas passer les particules solides du RuO₂ Bien entendu, les filtres THE ne piègent que le RuO₂ qui se serait formé en amont. Si la réduction du RuO₄ se fait en aval des filtres THE, il est évident qu'il peut y avoir rejet de RuO₂ à l'environnement.

En effet, le média filtrant en fibre de verre des barrières THE n'est pas capable de stopper le RuO₄ gazeux qui peut alors se diriger vers la cheminée, éventuellement en se réduisant en RuO₂ en chemin. Un moyen d'arrêter ce RuO₄ consiste donc à le réduire en RuO₂ en amont des barrières de filtration puis à le piéger sur un filtre THE.

On peut aussi faire passer l'effluent gazeux contenant le ruthénium sur un milieu réducteur tel que la poly (4-vinylpyridine) (PVP), comme décrit dans la demande européenne EP- 559536, ou des surfaces métalliques humides qui servent de catalyseurs. Cependant, les pièges solide efficaces à température ambiante, en particulier la PVP commercialisée, génèrent des pertes de charge très importantes, et imposent donc une augmentation significative de la puissance des ventilateurs.

On peut aussi procéder à un lavage de l'effluent gazeux au moyen d'une solution aqueuse, avec éventuellement un réactif tel que la soude. Cependant, la carbonatation de la soude par capture du CO₂ atmosphérique impose un fort renouvellement du réactif, et donc la génération d'un volume important d'effluent liquide.

De manière générale, l'efficacité de ces systèmes s'avère limitée. En effet, les éléments filtrants de l'art antérieur stoppent la plupart des aérosols, mais ils ne sont pas capables d'arrêter efficacement le RuO₄.

Pour des questions évidentes d'écologie, il existe donc un réel besoin d'un procédé efficace de capture du ruthénium susceptible d'être présent notamment dans les effluents gazeux des usines de retraitement de combustibles nucléaires irradiés.

### EXPOSÉ DE L'INVENTION

Les inventeurs ont mis au point un procédé et un dispositif de capture de ruthénium qui répondent à ce besoin.

En particulier, le procédé de capture de ruthénium présent dans un effluent gazeux de la présente invention se **caractérise en ce qu**'il comprend une mise en contact dudit effluent gazeux avec une solution ou une pâte aqueuse comprenant au moins un polymère d'alkylène glycol et/ou au moins un copolymère d'alkylènes glycol, dans lequel le ou les alkylène(s) a (ont) de 2 à 6 atomes de carbone.

Aussi, la présente invention se rapporte à l'utilisation de la solution ou de la pâte aqueuse précitée, pour piéger du ruthénium présent dans un effluent gazeux.

Le procédé de l'invention peut être mis en oeuvre soit dans un équipement de lavage des gaz, le polymère ou le copolymère étant alors utilisé comme réactif ajouté à l'eau de lavage, soit par fabrication d'une cartouche de capture de ruthénium. Ladite cartouche comprend par exemple un substrat sur lequel est disposé un polymère d'alkylène glycol ou un copolymère d'alkylènes glycol, dans lequel le ou les alkylène(s) a (ont) de 2 à 6 atomes de carbone.

La présente invention permet, par exemple dans une installation de lavage d'un effluent gazeux, grâce au polymère ou copolymère précité en solution aqueuse, d'atteindre de manière inattendue une efficacité comparable à celle de la soude, en évitant le problème de la carbonatation précité.

Les installations de lavage utilisables pour laver un effluent gazeux suivant le procédé de la présente invention sont celles connues de l'homme du métier. Par exemple, il peut s'agir d'une colonne à garnissage, d'un laveur venturi, et...

Dans le cas d'une mise en oeuvre par cartouche, la souplesse du procédé et du dispositif de la présente invention basés sur les polymères et copolymères précités permet avantageusement de concevoir des pièges à ruthénium adaptés aux installations de traitement des combustibles nucléaires irradiés existantes. En outre, la quantité de polymère qu'il est nécessaire de mettre en oeuvre est très faible, ce qui permet véritablement d'éviter tout problème de sûreté, et de ne pas créer de difficultés de gestion du déchet produit par l'invention lors des remplacements périodiques qui peuvent être nécessaires.

Le choix du polymère ou copolymère peut être effectué en fonction des conditions d'utilisation, par exemple en fonction de la température de service, de la nature des autres espèces chimiques présentes dans l'effluent gazeux, le cas échéant du substrat utilisé, des coûts, de la puissance de ventilation, etc. Selon l'invention, les propriétés de choix des polymères et copolymères utilisables dans la présente invention peuvent être les suivants :
- le polymère ou copolymère est avantageusement soluble dans l'eau de façon à pouvoir être déposé sur un substrat par imprégnation de solutions aqueuses,
- la composition du polymère ou copolymère est avantageusement simple, par exemple constituée uniquement de carbone, oxygène et hydrogène, ce qui réduit les coûts du procédé et du dispositif de la présente invention,
- le polymère ou copolymère est capable de piéger (ou capturer - ces deux termes étant utilisés de manière équivalente dans la présente) le RuO₄ du fait qu'il comporte un ou plusieurs groupement(s) réducteur(s) -OH par analogie avec l'effet réducteur de l'hydroxyde de sodium.

De préférence, le polymère ou copolymère présente des terminaisons hydroxyles. Il s'agit dans ce cas de polymères et copolymères d'alkylène glycol à terminaison à terminaisons hydroxyles.

Avantageusement, selon l'invention, le polymère d'alkylène glycol peut être par exemple choisi dans le groupe constitué du polyéthylène glycol, du polypropylène glycol, du polybutylène glycol, ou un mélange de ceux-ci.

Avantageusement, le copolymère d'alkylènes glycol est un copolymère constitué de polymères choisis dans le groupe constitué du polyéthylène glycol, du polypropylène glycol, du polybutylene glycol. Par exemple, le copolymère d'alkylènes glycol peut être un copolymère à la fois à base d'éthylène, de propylène et de butylène glycol.

Avantageusement, selon l'invention, le copolymère d'alkylènes glycol peut être de formule (I) suivante : 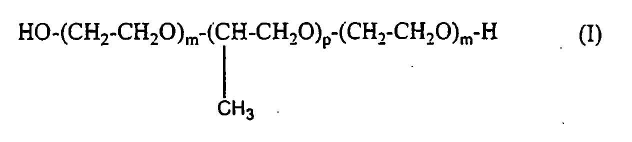 dans laquelle m et p sont des nombres entiers tels que, indépendamment, 1 ≤ m ≤ 8 et 3 ≤ p ≤ 12.

Le copolymère de formule (I) peut être par exemple un copolymère de polyéthylène glycol et de polypropylène glycol.

Selon l'invention, une solution ou une pâte d'un polymère ou d'un copolymère précité seul ; d'un mélange de différents polymères d'alkylènes glycol précités; ou d'un mélange de différents copolymères d'alkylènes glycol précités ; ou d'un mélange de un ou plusieurs polyalkylène(s) glycol précités et de un ou plusieurs copolymère(s) d'alkylènes glycol précités peut être utilisée dans le procédé et le dispositif de la présente invention. Aussi, les termes « polymère ou copolymère » ou « polymères ou copolymères d'alkylène(s) glycol(s) » dans la présente description couvrent bien entendu ces différents modes de réalisation de la présente invention.

Pour une capture du ruthénium sur un substrat solide, les polymères précités présentent en outre l'avantage de pouvoir, de par leurs propriétés mouillantes, être déposés aisément en couches minces sur un substrat offrant ainsi de meilleures caractéristiques en termes de perte de charge et de surface développée que les produits de l'art antérieur.

Ainsi, lorsqu'un substrat est utilisé pour mettre en oeuvre la présente invention, la pâte aqueuse du polymère ou copolymère est disposée sur le substrat. Ce mode de réalisation permet avantageusement de diminuer la tension interfaciale du substrat avec l'humidité ambiante et ainsi de favoriser la capture d'eau à partir de l'eau contenue dans l'effluent gazeux à traiter sur la surface du substrat, facilitant ainsi l'absorption du ruthénium et sa réduction.

Les formes de ruthénium concernées par la présente invention sont essentiellement RuO₄ et RuO₂. Après contact avec le substrat, le RuO₄ peut être absorbé par le polymère ou copolymère disposé sur la surface et réagir avec celle-ci. En effet, les polymères et copolymères précités favorisent l'absorption du RuO₄ et limitent sa désorption, et permettent donc d'obtenir un séjour du RuO₄ sur la surface suffisamment long pour qu'il se réduise. En outre, les fonctions hydroxyles de ces polymères et copolymères permettent la réduction de cette forme du ruthénium en RuO₂. La présente invention permet donc à la fois de favoriser la capture du ruthénium RuO₄ et l'opération chimique de sa réduction.

En outre, avantageusement, selon l'invention le substrat peut être choisi de préférence de manière à ce qu'il présente une grande surface de contact avec l'effluent gazeux à traiter pour une faible perte de charge. En effet, le ruthénium présent dans l'effluent entre en contact avec la surface par collision, et il est préférable que le taux de collision soit le plus élevé possible pour que le maximum de ruthénium soit capturé. Ainsi, de toute préférence, le substrat est un substrat divisé, par exemple un substrat sous forme de fibres, par exemple une laine ou un amas dé fibres, de préférence non tassé lorsqu'on veut éviter des pertes de charge par le passage de l'effluent gazeux à travers celui-ci.. Un substrat fibreux présente en outre l'avantage de retenir les éventuelles particules solides de ruthénium (RuO₂). Dans le cas d'un tel substrat, avantageusement la mise en contact de l'effluent gazeux se fera en obligeant ledit effluent à traverser le substrat fibreux.

Selon l'invention, le substrat peut être par exemple une laine métallique, de préférence de faible densité et de grande surface développée, telle qu'une laine d'inox. En effet, un tel substrat permet d'atteindre une très grande efficacité tout en ne générant qu'une très faible perte de charge, ne nécessitant pas de changer les ventilateurs existants. Le substrat peut également être une laine de verre.

Le polymère ou copolymère peut être disposé sur le substrat par tout moyen approprié connu de l'homme du métier. De préférence, par exemple lorsque le substrat est fibreux, ce moyen permettra de ne pas colmater le substrat afin qu'il puisse être traversé par l'effluent gazeux, en limitant si nécessaire les pertes de charge. Avantageusement, les polymères et copolymères utilisés dans la présente invention sont solubles dans l'eau et permettent donc de préparer des solutions aqueuses, appelées solutions d'imprégnation, pratiques pour disposer les polymères ou copolymères sur le substrat par exemple par simple trempage dans lesdites solutions d'imprégnation. La concentration de la solution sera déterminée notamment en fonction de la quantité de polymère ou copolymère à disposer sur le substrat. La fabrication de cette solution et l'imprégnation sont décrits dans les exemples ci-dessous. De préférence, après l'imprégnation, le substrat, par exemple les fibres le constituant, sera recouvert d'une couche ou film mince de pâte aqueuse du polymère ou copolymère choisi sur toute sa surface, c'est à dire dans le cas de fibres, sur toutes les fibres le constituant.

Selon l'invention, la mise en contact de l'effluent avec la solution ou la pâte du polymère ou copolymère, éventuellement déposé sur un substrat, peut être effectué à une température appropriée pour que les matières en présence (polymères, substrat) ne soient pas détruites. Elle s'effectuera en général à une température allant de 20 à 50°C.

Dans le dispositif de la présente invention, la cartouche peut comprendre en outre une structure supportant le substrat sur lequel est disposé le polymère ou le copolymère d'alkylène(s) glycol. Selon l'invention, cette structure, en plus de son rôle de support dudit substrat, peut être une structure adaptée à l'insertion de la cartouche dans une conduite d'effluents gazeux, qui peut préexister. Elle peut par exemple se présenter sous la forme d'un panier. Cette structure est de préférence réalisée en un matériau adapté à son utilisation dans les conditions de la présente invention, par exemple en inox. Elle confère en général à la cartouche sa géométrie.

Selon l'invention, la géométrie de ladite cartouche est de préférence adaptée afin de pouvoir être placée, avantageusement de manière amovible, dans une conduite de gaz comprenant du ruthénium de manière à obliger l'effluent gazeux à traverser ladite cartouche. En effet, cela permet la préfabrication de modules constitués du substrat et d'un support dont la mise en place ne nécessite aucune modification des installations ni des procédures. En outre, la cartouche peut être munie de joints d'étanchéité périphériques destinés à obliger ledit effluent gazeux contenant du ruthénium à traverser, de préférence sans fuite, ladite cartouche. Ceci peut être important pour contraindre l'effluent à traverser le substrat imprégné de polymère ou copolymère, et éviter toute fuite, afin de capturer la totalité du ruthénium présent dans l'effluent dans la cartouche.

Dans un mode de réalisation préféré, la cartouche de la présente invention peut donc comprendre :
- le substrat sur lequel est disposé le polymère ou le copolymère d'alkylène(s) glycol, ladite surface étant sous la forme de laine de verre ou d'inox,
- une structure, ou armature, supportant ledit substrat sur lequel est disposé le polymère ou le copolymère d'alkylène(s) glycol, ladite structure étant de préférence sous la forme d'un panier, de préférence grillagé, et
- des moyens d'étanchéité, périphériques de ladite cartouche, par exemple des joints, par exemple du type Viton (marque de commerce) ou silicone, permettant d'obliger l'effluent gazeux à passer à travers ledit substrat.

Selon l'invention, une ou plusieurs cartouches peuvent bien entendu être utilisée(s) si nécessaire, par exemple montées en série pour être traversées successivement par l'effluent gazeux.

Les réseaux de ventilation concernés par la présente invention pour la capture du ruthénium sont notamment ceux assurant l'extraction et le traitement des cellules de vitrification ainsi que ceux des cellules de démantèlement des installations de retraitement des combustibles nucléaires irradiés. Les réseaux de ventilation des installations de retraitement sont généralement composés de plusieurs barrières de filtration :
- pré-préfiltres de moyenne efficacité (ME) et préfiltres de haute efficacité (HE) directement en cellule,
- filtres de très haute efficacité (THE) de première barrière et deuxième barrière en caissons blindés,
- filtres (THE) de troisième barrière en caissons à sas étanches,
- des pièges HE en pied de cheminée.

Pour réussir à piéger le RuO₄, au moins une cartouche de la présente invention peut par exemple être insérée dans un ou plusieurs des éléments filtrants précités. Un mode de réalisation de la présente invention dans une installation est décrit ci-dessous dans les exemples.

Une cartouche selon l'invention peut être placée soit en première, soit en deuxième barrière. Les éléments filtrants de première barrière seront de préférence remplacés au moins environ tous les deux ans. Ils seront changés notamment lorsqu'ils deviennent trop irradiants du fait des particules radioactives piégées et éventuellement en cas de colmatage. Les éléments filtrants de deuxième barrière sont en général plus rarement remplacés, car on n'y observe pas de montée en irradiation ou de colmatage important.

Implanter le système de capture de ruthénium de la présente invention en première barrière présente l'avantage, au cas où il subirait une perte d'efficacité, de bénéficier des changements périodiques de cette première barrière. En revanche, ainsi implanté, le substrat ou média de capture du ruthénium subira une irradiation plus importante susceptible d'accélérer son vieillissement.

D'autres caractéristiques et avantages de la présente invention apparaîtront encore à l'homme du métier à la lecture des exemples illustratifs qui suivent, en référence aux figures annexées.

### BRÈVE DESCRIPTION DES DESSINS

- La figure 1 représente un banc d'essai utilisé pour tester la présente invention. Il est constitué d'un tube en verre, dans lequel ont été disposés des disques de laine d'inox (S) imprégnés de polymère ou copolymère selon l'invention et un disque vierge témoin. Ce tube est traversé d'un effluent gazeux contenant du ruthénium.
- La figure 2 est un graphique illustrant la quantité de ruthénium retenue par capture à partir de l'effluent dans des disques de laine d'inox imprégnés de polymère ou copolymère selon l'invention et un disque vierge témoin de laine d'inox.
- La figure 3 est un graphe qui représente l'efficacité de capture de ruthénium (en % en monocouche) à température ambiante d'une couche de substrat WB12 (marque de commerce) imprégné de différents polymères de par leur masse moléculaire (MM), à un taux d'environ 100% massique d'imprégnation.
- La figure 4 est un graphique indiquant le % en masse de ruthénium piégé pour chaque disque D1, D2 et D3 du banc d'essai de la figure 1, en utilisant différents polymères et copolymères selon la présente invention.
- La figure 5 est un schéma représentant une structure destinée à supporter le substrat imprégné de polymère ou copolymère selon l'invention. Cette structure comprend deux cylindres concentriques en grillage.
- La figure 6 est un schéma montrant comment un substrat imprégné de polymère ou copolymère selon l'invention peut être disposé (ici enroulé) autour du cylindre central de la structure représentée sur la figure 5.
- La figure 7 est un schéma montrant comment le cylindre externe de la structure représentée sur la figure 5 est mis en place autour du substrat enroulé autour du cylindre central représenté sur la figure 6, pour former une cartouche selon la présente invention.
- La figure 8 est un schéma représentatif d'un filtre THE dans lequel a été disposée la cartouche selon l'invention représentée sur la figure 7.

### EXEMPLES

### Exemple 1 : exemple de polymères et copolymères utilisables selon la présente invention

Le tableau 1 ci-dessous regroupe différents polymères, copolymères et mélanges utilisables selon la présente invention.

Ils sont disponibles dans le commerce par exemple auprès de :
- LAMBERT RIVIERE (fabricant : ICI)
- ALBRIGHT & WILSON
- ROTH SOCHIEL

**Tableau 1**

| Dénomination | signification | Température de fusion (°C) |
|---|---|---|
| PEG | Polyéthylène glycol | - |
| PEG 300 à 35000 | Polyéthylènes glycols ayant des masses moléculaires allant de 300 à 35000 g/mol | - |
| COPO 1 | Copolymère bloc de polyéthylène glycol et de polypropylène glycol | <0 |
| COPO 2 | Copolymère d'éthylène, propylène et butylène glycol | 27 |
| COPO 7 | PEG 2000 + PEG 300 Proportions en poids : 50/50 | 25 |
| COPO 9 | PEG 2000 + PEG 300 + COPO 1 Proportions en poids : 70/20/10 | 34 |
| COPO 10 | PEG 2000 + PEG 300 + COPO 1 Proportions en poids : 45/45/10 | 23 |
| COPO 11 | PEG 2000 + COPO 2 Proportions en poids : 50/50 | 38 |
| COPO 14 | copolymère à base d'éthylène, de propylène et de butylène glycol | 37 |

### Exemple 2 : exemple de capture du ruthénium par un copolymère selon la présente invention

Des échantillons de laine d'inox (diamètre des fibres (∅) : 12µm), appelée WB 12 (marque de commerce), en tant que substrat sont imprégnés d'une solution de copolymère selon la présente invention à 5% massique. Le copolymère de la présente invention, utilisé ici, qui présente des propriétés de tensioactif, est un copolymère PEG-PPG (polyéthylène glycol - polypropylène glycol), liquide à température ambiante, désigné dans le tableau 1 ci-dessus COPO1. Il provient ici de la société Albright et Wilson, sous le nom commercial AMPLICAN.

Les conditions opératoires des essais sont les suivantes :
- T°C _{:} 18,5°C
- hygrométrie : 42%
- [O₃] _{:} 1,8 mg.l⁻¹
- débit _{:} 2,24 m³.h⁻¹
- durée de l'essai : 5 h
- 1 disque vierge + 3 disques WB 12 imprégnés à 100% de COPO1.

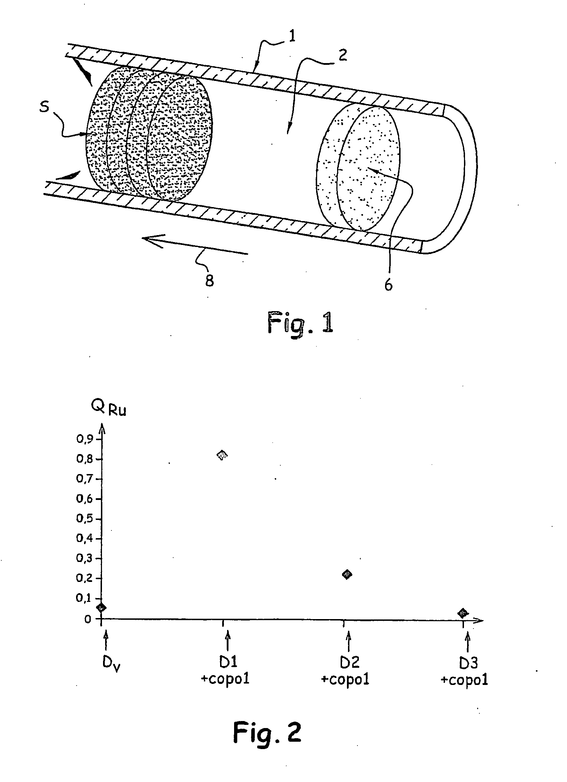

La figure 1 représente un banc d'essai (1) utilisé dans cet exemple. Il est constitué d'un tube (2) en verre, dans lequel ont été disposés les 3 disques WB 12 (S) imprégnés à 100% de COPO1 et le disque de laine d'inox vierge (6) témoin. La flèche (8) indique le sens du flux d'effluent gazeux qui comprend du ruthénium qui traverse le tube.

Les 3 disques ainsi que le disque témoin en amont des pièges sont analysés, la quantité de ruthénium capturée (QRu) dans les disques est reportée dans le tableau 2 ci-dessous. Le % Ru piégé correspond à la quantité de ruthénium piégé sur un disque par rapport à la quantité totale de ruthénium générée. Le % piégé du Ru arrivant sur le piège correspond à la quantité de ruthénium piégé sur un disque par rapport à la quantité de ruthénium qui est arrivée sur ce disque.

Une garde placée en aval du dispositif permet d'évaluer la quantité de Ru non piégé par les disques.

**Tableau 2**

| | **Disque WB12 vierge** | **Disque n°1 WB12 +COPO 1** | **Disque n°2 WB12 + COPO 1** | **Disque n°3 WB12 +COPO 1** | **Garde** |
|---|---|---|---|---|---|
| QRu (mg) | 0,056 | 0,818 | 0,212 | 0,014 | < 0,01 |
| % Ru piégé | 5 | 74 | 19 | 1 | - |
| % piégé du Ru arrivant sur le piège | 5 | 78 | 94 | - | - |

Les résultats sont reportés sur le graphique de la figure 2 annexée. Sur cette figure, « Dv » indique le disque vierge de laine d'inox, « D1, D2 et D3 » les différents disques précités, dans le sens du passage de l'effluent gazeux (de D1 vers D3). Les résultats sont très satisfaisants, car la quasi-totalité du ruthénium a été piégée sur les trois pièges montés en série.

### Exemple 3 : effet due l'augmentation de la température de fusion du polymère ou copolymère selon l'invention

Afin d'étudier l'impact d'une modification de la température de fusion du polymère sur son efficacité, les inventeurs ont travaillé sur une série de polymères de même famille, pour lesquels seuls la masse moléculaire et l'indice d'hydroxyle varient.

Ces polymères sont des polyéthylènes glycols (PEG) dont les caractéristiques sont données dans le tableau 3 suivant :

**Tableau 3**

| | **Etat t° ambiante** | **Masse moléculaire (g/mol)** | **T° fusion (°C)** | **Indice d'hydroxyle I_{(OH)}** |
|---|---|---|---|---|
| PEG 600 | Liquide | 600 | 15-25°C | 178-197 |
| PEG 1500 | Solide | 1500 | 42-48°C | 70-80 |
| PEG 35 000 | Solide | 35 000 | 60-65°C | 3-4 |

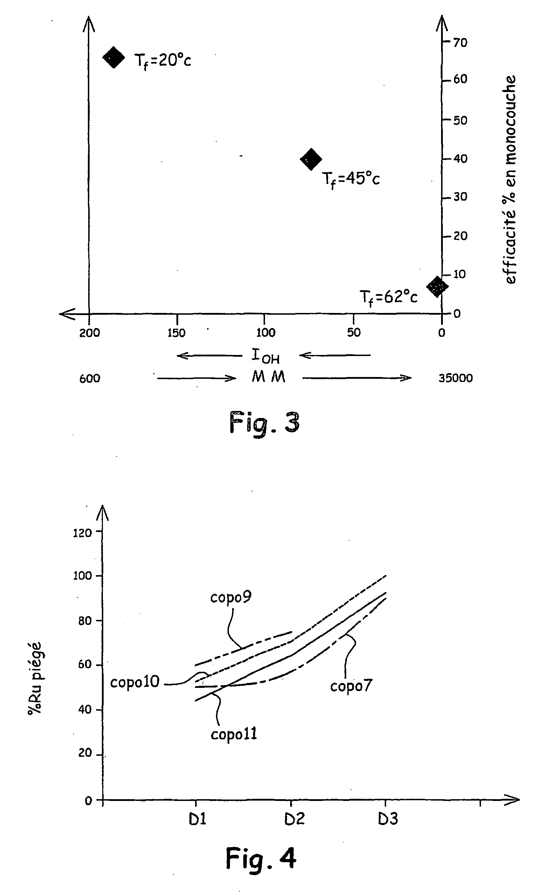

Le graphe de la figure 3 représente l'efficacité de capture à température ambiante d'une couche de substrat WB12 imprégné de polymère à un taux d'environ 100% massique (masse polymère = masse inox).

L'efficacité de capture diminue fortement avec une augmentation de la masse moléculaire (MM) et une diminution de l'indice d'hydroxyle (I_{OH}). Ces deux propriétés varient de façon inverse l'une de l'autre, l'indice d'hydroxyle est un indicateur du nombre de bouts de chaînes de polymère (HO-chaîne éther-oxyde-OH). Si on divise une chaîne de polymère, on augmente le nombre de bouts de chaîne (OH) ; en revanche, on diminue sa masse moléculaire. Ces paramètres sont liés de la façon indiquée dans le tableau 4 suivant :

**Tableau 4**

| | Masse moléculaire | Indice d'hydroxyle |
|---|---|---|
| PEG 1500 ↓ PEG 600 | divisé par 2,5 | multiplié par 2,5 |

Plus on augmente la température de fusion d'un polymère de façon à augmenter sa tenue mécanique, et moins il apparaît efficace. Il y a donc un compromis à trouver entre la tenue mécanique et l'efficacité que l'homme du métier saura aisément trouver à partir de la présente description.

Pour les exemples suivants, les inventeurs ont choisi de retenir les polymères qui ont une température de fusion qui se trouve dans le domaine d'utilisation choisi d'environ 40°C.

A cette température, le polymère est cireux, c'est à dire non liquide, sous la forme d'un solide mou.

### Exemple 4 : mélanges de polymères

En parallèle de la recherche d'un polymère dont la température de fusion est de 40°C, les inventeurs ont réalisé des mélanges de polymères permettant d'atteindre une température de fusion du mélange de 40°C. La base du mélange est de réunir un polymère à haut poids moléculaire à température de fusion élevée avec un polymère de faible masse qui lui apporte la tensio-activité, l'indice d'hydroxyle.

Les mélanges préparés sont les COPO 7, COPO 11, COPO 2, COPO 9, et COPO 10 définis dans le tableau 1 ci-dessus.

De la laine d'inox WB12 a été imprégnée à un taux d'environ 100% par chacun de ces mélanges, avant test sur le banc d'essai décrit ci-dessus. Les tests sont réalisés à 20°C et 40% d'humidité relative.

Les résultats sont regroupés sur le graphe de la figure 4 annexée qui indique le % en masse de ruthénium piégé pour chaque disque D1, D2 et D3.

Le fait que l'efficacité de la couche 3 soit supérieure à celle des couches en amont résulte d'une saturation en Ru de ces couches en amont. Tous les produits testés ont une bonne efficacité. C'est pourquoi le choix a été effectué en prenant comme critère unique des impératifs de délais et donc de disponibilité commerciale de réactifs.

Le PEG 2000 et le COPO 2 étant disponibles en quantité suffisante pour réaliser une imprégnation à échelle industrielle, les inventeurs ont retenu le COPO 11 comme produit de référence dans cet exemple.

Un mélange peut parfois présenter des inconvénients tels que la démixtion qui peut engendrer une modification du comportement du polymère au cours du temps. C'est pourquoi, avantageusement, selon l'invention, les copolymères sont préférés, et notamment ceux présentant toutes les caractéristiques du COPO 11, en termes de température de fusion et d'efficacité. Un copolymère ayant ces caractéristiques intéressantes est par exemple le COPO 14 qui est un copolymère à base d'éthylène, de propylène et de butylène glycol, commercialisé par exemple par la société Lambert Rivière (fabricant ICI), sous le nom commercial SYMPERONIC A20.

### Exemple 5 : imprégnation d'un substrat

L'imprégnation du copolymère sur le substrat est une étape importante dans la réalisation de la cartouche piège selon l'invention. Si elle est mal effectuée, et notamment si le copolymère ne recouvre pas la totalité du substrat, par exemple de la laine d'inox comme dans cet exemple, la cartouche peut laisser passer du RuO₄ et l'efficacité de la cartouche en sera globalement affectée. Il faut, de plus, que l'imprégnation soit homogène pour ne pas créer de chemins préférentiels.

Ces essais visaient donc à maîtriser la quantité de polymère ou copolymère déposée sur un substrat lors de l'étape d'imprégnation.

Les premiers essais ont consisté à faire varier la concentration du polymère d'imprégnation. Le substrat était une laine d'inox WB12 (marque de commerce). Les échantillons de laine d'inox WB12 dans cet exemple avaient pour dimensions 70 x 100 mm. Ils ont été immergés dans la solution de polymère puis posés sur une grille métallique (inox) avant séchage durant une nuit à 40°C. Les résultats d'imprégnation sont donnés dans le tableau 5 suivant :

**Tableau 5**

| **[COPO 14] g.l⁻¹** | **WB 12 (g)** | **WB 12 + COPO 14 Sec (g)** | **Taux d'imprégnation** |
|---|---|---|---|
| 100 | 1,8802 | 3,8863 | 107% |
| 50 | 1,8729 | 2,7011 | 44% |
| 25 | 1,8388 | 2,2501 | 22% |
| 10 | 1,9469 | 2,1190 | 9% |
| 5 | 2,1222 | 2,2135 | 4% |

La quantité de polymère déposée varie donc de façon quasi-linéaire avec la concentration de la solution d'imprégnation.

Les inventeurs ont donc retenu par choix pratique une solution d'imprégnation à 10 g.l⁻¹ pour la fabrication des pièges industriels à partir de cette laine.

De la même façon, des essais sont réalisés avec de la laine d'inox WB 22 (marque de commerce). Cette laine d'inox est différente de la WB 12 (marque de commerce) de par le diamètre des fibres (12 µm pour la WB 12 et 22 µm pour la WB 22). La masse surfacique par couche reste la même pour les deux laines (300 g.m⁻²) . Les inventeurs ont retenu une solution d'imprégnation à 25 g.l⁻¹ pour cette laine.

Les résultats d'imprégnation sont donnés dans le tableau 6 suivant :

**Tableau 6**

| **[COPO 14] g.l⁻¹** | **Taux d'imprégnation** |
|---|---|
| 40 | 27% |
| 30 | 18% |
| 25 | 10% |
| 20 | 7,5% |
| 15 | 6% |

La quantité de polymère déposée varie donc aussi de façon quasi-linéaire avec la concentration de la solution d'imprégnation. La concentration de 25g/l a été retenue ici.

Afin de contrôler l'homogénéité du dépôt de polymère sur la surface du substrat constitué de laine d'inox (WB 12), les inventeurs ont soumis un disque de WB 12 imprégné de COPO 14 à un flux d'air ruthénié.

Sur cet échantillon, ils ont réalisé une observation par microscopie électronique (MEB). Ils ont par la suite comparée l'image X des raies spécifiques du ruthénium sur le même échantillon. Ils ont constaté clairement que cers deux images sont superposables et quasiment identiques, ce qui confirme que le ruthénium s'est déposé de façon homogène à la surface de la laine d'inox, donc que le polymère recouvre parfaitement les fibres de la laine d'inox.

### Exemple 6 : tenue du polymère aux NOx et à l'ozone

Compte tenu de la présence éventuelle d'oxydes d'azote ou vapeurs nitreuses (NOx) et d'ozone dans les effluents gazeux industriels, les inventeurs ont mis en oeuvre des tests de comportement du support imprégné de COPO 14 vis-à-vis des NOx et de l'ozone.

La famille du COPO est sensible aux NOx, et la réaction se traduit par la formation de produits de dégradation qui sont instables et se décomposent en libérant de la chaleur ; toutefois cette réaction n'est pas explosive ni violente.

De la même façon que pour les NOx, de la laine d'inox imprégnée de COPO 14 à 30% a été soumise à un flux ozoné en utilisant pour cela le banc de test décrit ci-dessus. Les conditions sont définies à partir de l'hypothèse de génération d'ozone par radiolyse de l'air. Les échantillons sont soumis à un flux d'air ozoné de 2,5 m³.h⁻¹ à une teneur en ozone de 0,7 g.m⁻³ d'air humide.

Le COPO 14 semble se comporter de façon similaire vis-à-vis des NOx et de l'ozone. Toutefois, les phénomènes de dégradation par l'ozone sont beaucoup moins accentués : dégagement de chaleur moins important, exotherme débutant à 85°C.

### Exemple 7 : Dispositif de capture du ruthénium selon l'invention

La solution présentée dans cet exemple permet d'éviter toute modification des installations en place. Elle consiste à placer le piège à ruthénium de la présente invention au coeur d'un filtre THE cylindrique de deuxième barrière. Ceci est réalisé par découpe des barres supérieures du filtre et introduction d'un panier contenant de la laine WB 12 imprégnée de COPO 14.

### Copolymère

Le copolymère choisi dans cet exemple est le COPO 14 (voir tableau 1).

### Substrat

Le substrat choisi est une laine d'inox parce qu'elle offre une grande surface de contact avec l'effluent gazeux pour une faible perte de charge. La laine d'inox dite WB 12 (marque de commerce) est composée de fibres en acier inoxydable de diamètre 12 microns. Sa surface spécifique est de 13 m²/m² pour une laine d'épaisseur 7 mm, soit environ 1857 m²/m³ de laine non tassée. Sa masse spécifique est de 300 g/m² soit environ 43 kg/m³ (toujours non tassée).

### Imprégnation

Plusieurs techniques d'imprégnation ont été testées avec pour objectif d'imprégner le piège en entier : panier + 2 kg de laine d'inox. Après de nombreux essais, il a été décidé d'effectuer une imprégnation plaque par plaque de laine d'inox et d'assembler le piège par la suite. Le taux d'imprégnation visé est de 5% par la méthode d'immersion des plaques de laine d'inox.

Un critère de qualité a été fixé dans cette expérience, il consistait à rejeter toute plaque dont le taux d'imprégnation est inférieur à 2% ou supérieur à 10%. Ainsi, pour un piège contenant environ 2 kg de laine d'inox, la quantité maximale de COPO 14 sera de 200 g. La solution d'imprégnation utilisée était à 10g de copolymère par litre d'eau (voir exemple ci-dessus). La laine imprégnée a été séchée à plat à 40°C.

### La cartouche

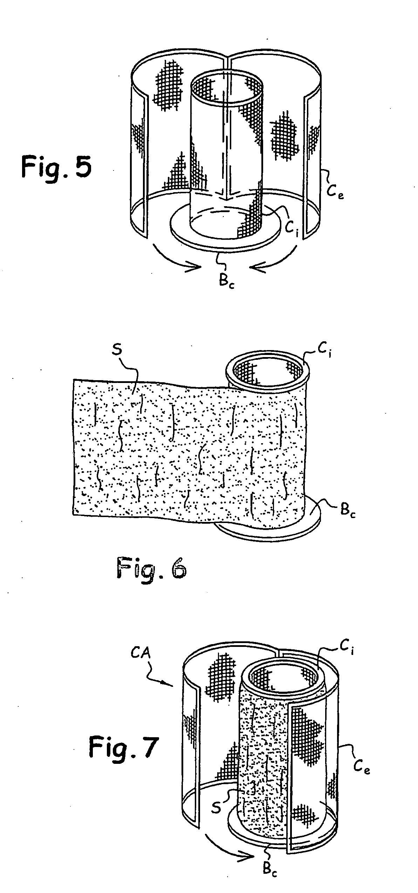

L'armature métallique type panier de la cartouche piège a la forme d'un double cylindre comme représenté sur la figure 5 annexée : un cylindre interne (Ci) et un cylindre externe (Ce) . Le cylindre interne (Ci) est en tôle perforée inox C10U12, c'est-à-dire troué par carrés de 10 mm et un entraxe de 12 mm (grillage). Ce cylindre est soudé sur une base circulaire (Bc) en tôle inox d'un diamètre supérieur, trouée en son centre pour laisser passer un axe de maintien de l'élément filtrant (ceci dans le cas où un tel cylindre est nécessaire ; une armature sans trou en son centre est bien entendu possible).

C'est sur le premier cylindre (Ci) que sont enroulées huit couches de laine d'inox imprégnées de copolymère qui forment le substrat (S) comme représenté sur la figure 6. Deux couches supplémentaires de laine d'inox, non imprégnées de copolymère sont ensuite ajoutées par dessus. Le cylindre externe (Ce) vient recouvrir la laine d'inox, il s'agit d'un grillage inox 12,7 x 12,7. La base de l'armature est un fond plat en inox, troué de façon à laisser passer l'axe de maintien de l'élément filtrant THE. La cartouche piège possède donc au total 10 couches de laine d'inox. Les deux couches enroulées en dernier sont vierges, c'est à dire sans copolymère : elles empêchent l'éventuelle migration du copolymère d'imprégnation vers l'extérieur de l'élément.

La cartouche (CA) obtenue selon l'invention est représentée sur la figure 7. Sa masse totale, constituée du panier + laine + copolymère, est d'environ 8 kg répartie approximativement de la manière suivante :
- structure panier : environ 5,5 kg
- laine d'inox : entre 2 et 2,5 kg
- copolymère déposé : 200 g maximum
- joints Viton (marque de commerce) + silicone (idem THE) _{:} de 300 à 400 g

### Insertion de la cartouche selon l'invention dans une installation existante

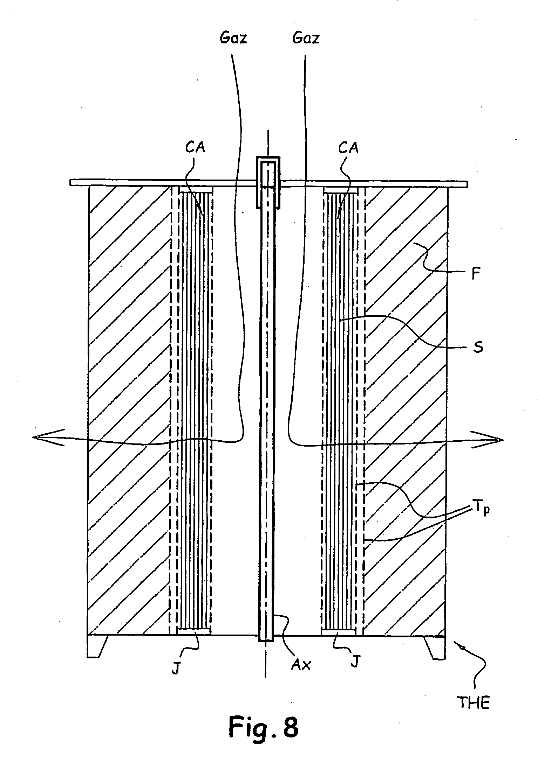

Pour terminer, la cartouche piège fabriquée selon l'invention est insérée à l'intérieur d'un l'élément filtrant (THE) constitué de fibres de verre (F) maintenues par une tôle perforée (Tp). L'ensemble est représenté sur la figure 8 annexée.

On retire donc l'axe de maintien (Ax) de l'élément filtrant (F) puis on y glisse à l'intérieur la cartouche piège (CA) . Un joint de silicone (J) est ensuite appliqué aux extrémités de la cartouche piège pour assurer une adhésion et une étanchéité entre la cartouche piège et l'élément filtrant (F) . L'axe de maintien est ensuite remis en place. L'élément filtrant et sa cartouche piège sont prêts à être installés dans les caissons blindés des ateliers de vitrification.

### Mesures de pertes de charge

Des mesures de pertes de charge ont été réalisées sur cet assemblage à divers débits de gaz à traiter. Elles sont regroupées dans le tableau 7 ci-dessous.

Ces valeurs sont mesurées sur plusieurs essais à ± 25%.

L'imprégnation du copolymère sur la laine d'inox n'a donc pas, dans le cas présent, d'effet significatif sur la perte de charge.

**Tableau 7**

| Débit | m³/h | 1000 | 2000 | 3000 |
|---|---|---|---|---|
| Perte de charge dans l'élément filtrant THE | Pa | 90 | 180 | 270 |
| Perte de charge dans l'armature de la cartouche piège | Pa | 40 | 100 | 200 |
| Perte de charge dans les 10 couches de laine d'inox | Pa | 110 | 200 | 360 |
| Total | Pa | 240 | 480 | 830 |

### Exemple 8 : essai en actif

Une boucle expérimentale comprenant dans cet ordre : une ou deux cartouche (s) expérimentale (s) en série (Exp. 1 et Exp. 2) conforme(s) à la présente invention, zéro ou une cartouche PVP, un filtre papier, et deux cartouches PVP en série (PVP1 et PVP2), d'un compteur volumétrique et d'une pompe a été fabriquée. L'effluent gazeux traverse cette boucle dans cet ordre. Le diamètre des cartouches est de 5 cm. Les débits de prélèvements permettent d'atteindre des vitesses de passage (fût vide) de 0,5 à 1 m.s⁻¹, ce qui est représentatif des vitesses de passage sur les filtres THE 2ème barrière de l'installation de retraitement de combustibles irradiés existantes.

Le dispositif est implanté dans un atelier de vitrification, en aval des filtres.

Une première série d'essais a été réalisée sur de la laine de verre imprégnée de COPO 1 à un taux de 100%. Les résultats sont donnés dans le tableau 8 suivant, dans lequel ¹⁰⁶Ru.Rh (Bq) représente la quantité de ruthénium (et de son descendant le rhodium) mesurée par radiométrie.

**Tableau 8**

| | ¹⁰⁶Ru.Rh (Bq) | | | | | Volume (m³) |
|---|---|---|---|---|---|---|
| | Exp. 1. | PVP | Filtre papier | PVP 1 | PVP 2 | |
| 1 semaine | 320 | 6,2 | < 5,7 | <8.6 | < 7 | 620 |
| 2 semaines nouvelle cartouche | 410 | 4,9 | 4,2 | < 7,7 | < 6,7 | > 200 |

Sur une semaine de fonctionnement, les résultats sont encourageants, la PVP juste en aval de la cartouche expérimentale est en limite de détection, ce qui indique qu'aucune fuite n'a eu lieu.

Une deuxième série d'essais a été réalisée sur de la laine d'inox WB 12 imprégnée de COPO 1 à un taux de 100%. La cartouche est constituée de 8 couches de WB 12. Elle est laissée en place pour un test d'endurance.

Les résultats sont donnés dans le tableau 9 ci-dessous.

**Tableau 9**

| | ¹⁰⁶Ru.Rh (Bq) | | | | | Volume (m³) |
|---|---|---|---|---|---|---|
| | Exp. 1. | PVP | Filtre papier | PVP1 1 | PVP 2 | |
| 7 j | np | < 6,3 | 5,4 | 5,5 | < 7,8 | 533 |
| 14 j | np | < 7,8 | 6,2 | 5,8 | < 6,1 | 309 |
| 21 j | np | 18 | 9,2 | 16 | < 6,3 | 359 |
| 31 j | 6500 | 600 | 160 | 1100 | 40 | 1226 |
| 38 j | 5900 | 2500 | < 6,8 | < 8,2 | 17 | 396 |

| | | | | | | |
|---|---|---|---|---|---|---|
| (np : non prélevée) | | | | | | |

¹⁰⁶Ru.Rh (Bq) représente la quantité de ruthénium (et de son descendant le rhodium) mesurée par radiométrie.

Après 21 jours de test, les inventeurs ont suspecté une fuite, la cartouche a été retirée 7 jours plus tard. Les résultats sur la PVP en aval, ainsi que le repositionnement de la cartouche pendant 7 jours ont confirmé cette fuite, qui est due à une migration lente du COPO1, ce produit étant trop fluide dans les conditions d'essais (40°C).

Une troisième série d'essais consiste à évaluer l'efficacité d'une laine d'inox WB 22 imprégnée de COPO 2 commercialisé par exemple par la société Lambert Rivière (fabricant ICI), sous le nom commercial SYMPERONIC A11. Il est utilisé à un taux de 22%. La cartouche est constituée d'une seule couche de WB 22. Les résultats sont donnés dans le tableau 10 suivant :

**Tableau 10**

| | ¹⁰⁶Ru.Rh (Bq) | | | | | Volume (m³) |
|---|---|---|---|---|---|---|
| | Exp. 1 | Cartouche vide | Filtre papier | PVP 1 | PVP 2 | |
| 7 j | 4000 | 110 | 74 | 92 | 7,5 | 1054 |

Une seule couché s'avère déjà très efficace et ce malgré une vitesse de passage de 2 à 3 fois plus importante que lors des essais précédents.

Le quatrième essai est un essai d'endurance dans une configuration proche de celle retenue pour les pièges deuxième barrière, à savoir, 8 couches de WB 12 imprégnées à 5,7% de COPO 14 (ces 8 couches sont réparties sur 2 cartouches (Exp. 1 et Exp. 2), soit 8 cm d'épaisseur). Les résultats sont donnés dans le tableau 11 ci-dessous.

**Tableau 11**

| | ¹⁰⁶Ru.Rh (Bq) | | | | | Volume (m³) |
|---|---|---|---|---|---|---|
| | Exp. 1 | Exp. 2 | Filtre papier | PVP 1 | PVP 2 | |
| ^{*}9j | 8600 | 280 | 57 | 71 | 25 | 858 |
| 20 j | np | np | 3,7 | np | 5 | 970 |
| 25 j | np | np | 4,1 | < 7,4 | < 7,1 | 369 |
| 32 j | np | np | < 5,4 | < 8,4 | < 4,9 | 621 |
| 39 j | np | np | < 7 | < 9,6 | < 8,2 | 596 |
| 49 j | np | np | < 7,2 | < 4,2 | < 8,8 | 723 |
| 56 j | np | np | < 4,7 | < 3,1 | < 4,4 | 528 |
| 63 j | np | np | < 5 | <6,5 | < 7 | / |
| 70 j | np | np | 6,7 | < 7 | < 6,9 | 586 |
| 79 j | np | np | < 6 | < 7,2 | < 7 | 759 |
| 86 j | np | np | < 6,2 | < 4,2 | < 6,8 | 504 |
| 93j | np | np | < 5,2 | < 7,4 | < 8,7 | 539 |
| 100 j | np | np | < 4,7 | < 5,9 | < 7 | 561 |
| 109 j | np | np | 17 | 8 | < 8 | 830 |
| 118 j | np | np | 26 | < 7,9 | < 7,4 | 563 |
| 124 j | np | np | 22 | < 9,2 | < 6,5 | 443 |
| 133 j | np | np | 18 | < 8,7 | < 6,8 | 619 |
| 140 j | np | np | 10 | < 7,4 | < 7,4 | 585 |
| 144 j | 34000 | 430 | < 8,1 | < 7,4 | < 7,5 | 320 |

| | | | | | | |
|---|---|---|---|---|---|---|
| np : non prélevée | | | | | | |

Après 144 jours d'essai, correspondant au traitement de 11790 m³, les cartouches expérimentales ont été déposées sans qu'aucune baisse d'efficacité n'ait été constatée.

(*) : Un défaut d'étanchéité a été identifié, ce qui se traduit par une légère activité sur les PVP. Les cartouches ont été retirées pour la mise en place de joints et ont été comptées avant d'être remises en place.

### Exemple 9 : capture du ruthénium par une solution aqueuse de copolymère

Selon l'invention, les polymères et copolymères éthylène glycol, propylène glycol, butylène glycol, peuvent être utilisés comme réactifs ajoutés à l'eau de lavage dans un équipement de lavage de gaz (colonne à garnissage, venturi, etc.).

En effet, des essais comparatifs ont été réalisés avec différents réactifs, dans lesquels de l'air chargé de RuO₄ balayait la surface du liquide. Les paramètres physiques (géométrie, vitesse de l'air) étaient les mêmes pour tous les essais, seule la composition chimique de la solution variait.

Les résultats présentés dans le tableau 12 ci-dessous montrent par exemple qu'un copolymère éthylène glycol-propylène glycol, ici désigné COPO1, est très efficace pour l'absorption du RuO₄.

**Tableau 12**

| | **RuO₄ généré (10⁻⁶ mol)** | **RuO₄ absorbé (10⁻⁶ mol)** | **% absorbé** | **pH mesuré ou calculé** |
|---|---|---|---|---|
| **Essais en eau pure** | | | | |
| Eau pure: essai A | 19,04 | 6,02 | 31,6 | 5,7 |
| Eau pure : essai B | 9,80 | 3,21 | 32,8 | 5,7* |

| **Essais en présence de réactifs** | | | | |
|---|---|---|---|---|
| Na₂CO₃ (0,4M)+NaHCO₃ (0,2M) | 19,73 | 4,02 | 20,4 | 10,1 |
| Na₂CO₃(0,4M)+NaHCO₃ (0,2M) | 9,43 | 2,00 | 21,2 | 9,5 |
| Tampon pH = 7 | 3,83 | 1,04 | 27,2 | 6,9 |
| Na₂SO₄ | 9,48 | 2,64 | 27,8 | 7,5 |
| HNO₃ | 5,31 | 1,76 | 33,1 | 1,6 |
| Soude 0,01 M | 21,69 | 7,13 | 32,9 | - |
| Soude 0,1 M : essai A | 11,92 | 6,66 | 55,9 | |
| Soude 0,1 M : essai B | 23,61 | 13,37 | 56,6 | |
| Soude 1 M : essai A | 11,69 | 11,17 | 95,6 | |
| Soude 1 M : essai B | 12,11 | 10,1 | 83,4 | |
| NHA 0,5 M | 3,79 | 3,06 | 80,7 | |
| NHA 0,0475 M | 7,15 | 6,25 | 87,5 | |
| COPO 1 5% | 13,28 | 13,1 | 98,6 | |

## Revendications

1. Utilisation d'une solution ou d'une pâte aqueuse comprenant au moins un polymère d'alkylène glycol et/ou au moins un copolymère d'alkylènes glycol, dans laquelle le ou les alkylène(s) a (ont) de 2 à 6 atomes de carbone, pour piéger du ruthénium présent dans un effluent gazeux.

2. Utilisation selon la revendication 1, dans laquelle le polymère d'alkylène glycol est choisi dans le groupe constitué du polyéthylène glycol, du polypropylène glycol, du polybutylène glycol, ou un mélange de ceux-ci.

3. Utilisation selon la revendication 1, dans laquelle le copolymère d'alkylènes glycol est un copolymère constitué de polymères choisis dans le groupe constitué du polyéthylène glycol, du polypropylène glycol, du polybutylène glycol, ou un mélange de ceux-ci.

4. Utilisation selon la revendication 1, dans laquelle le copolymère d'alkylènes glycol est un copolymère à base d'éthylène, de propylène et de butylène glycol.

5. Utilisation selon la revendication 1 ou 3, dans laquelle le copolymère d'alkylènes glycol est de formule (I) suivante : 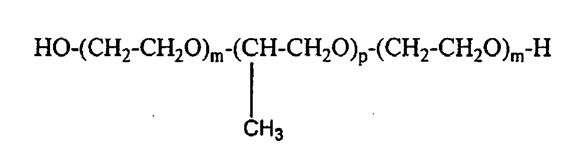 dans laquelle m et p sont des nombres entiers tels que, indépendamment, 1 ≤ m ≤ 8 et 3 ≤ p ≤ 12.

6. Utilisation selon la revendication 1 ou 5, dans laquelle le copolymère d'alkylènes glycol est un copolymère d'éthylène glycol et de propylène glycol.

7. Utilisation selon la revendication. 1, dans laquelle la solution ou pâte aqueuse est disposée sur un substrat constitué de fibres.

8. Utilisation selon la revendication 7, dans laquelle le substrat est constitué d'une laine de verre ou d'une laine d'inox.

9. Utilisation selon la revendication 7, dans laquelle le polymère d'alkylène glycol ou le copolymère d'alkylènes glycol est disposé sur ledit substrat par trempage du substrat dans une solution aqueuse dudit polymère ou dudit copolymère.

10. Utilisation selon la revendication 1, dans laquelle le polymère d'alkylène glycol ou le copolymère d'alkylènes glycol présente des terminaisons hydroxyles.

11. Cartouche de capture de ruthénium, ladite cartouche comprenant un substrat sur lequel est disposé un polymère d'alkylène glycol ou un copolymère d'alkylènes glycol, dans lequel le ou les alkylène(s) a (ont) de 2 à 6 atomes de carbone.

12. Cartouche selon la revendication 11, dans laquelle le polymère d'alkylène glycol est choisi dans le groupe constitué du polyéthylène glycol, du polypropylène glycol, du polybutylène glycol.

13. Cartouche selon la revendication 11, dans laquelle le copolymère d'alkylènes glycol est un copolymère constitué de polymères choisis dans le groupe constitué du polyéthylène glycol, du polypropylène glycol, du polybutylène glycol.

14. Cartouche selon la revendication 11, dans laquelle le copolymère d'alkylènes glycol est un copolymère à base d'éthylène, de propylène et de butylène glycol.

15. Cartouche selon la revendication 11 ou 12, dans laquelle le copolymère d'alkylènes glycol est de formule (I) suivante : 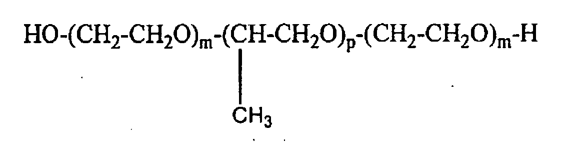 dans laquelle m et p sont des nombres entiers tels que, indépendamment, 1 ≤ m ≤ 8 et 3 ≤ p ≤ 12.

16. Cartouche selon la revendication 11 ou 15, dans laquelle le copolymère d'alkylènes glycol est un copolymère d'éthylène glycol et de propylène glycol.

17. Cartouche selon la revendication 11, dans laquelle le substrat est constitué de fibres.

18. Cartouche selon la revendication 11, dans laquelle le substrat est constitué d'une laine de verre ou d'une laine d'inox.

19. Cartouche selon la revendication 11, 17 ou 18, dans laquelle ledit polymère ou ledit copolymère d'alkylène(s) glycol est disposé sur ladite surface par trempage du substrat dans une solution aqueuse dudit polymère ou dudit copolymère.

20. Cartouche selon la revendication 11, ladite cartouche comprenant en outre une structure supportant le substrat sur lequel est disposé le polymère ou le copolymère d'alkylène(s) glycol.

21. Cartouche selon la revendication 11 comprenant :
- le substrat sur lequel est disposé le polymère ou le copolymère d'alkylène(s) glycol, ladite surface étant sous la forme de laine de verre ou d'inox,
- une structure supportant ledit substrat sur lequel est disposé le polymère ou le copolymère d'alkylène(s) glycol, et
- des moyens d'étanchéité, périphériques de ladite cartouche, permettant d'obliger l'effluent gazeux à passer à travers ledit substrat.

22. Utilisation selon la revendication 1, dans laquelle la solution aqueuse est ajoutée à l'eau de lavage d'une installation de lavage de gaz.

## Claims

1. Use of an aqueous solution or slurry comprising at least one alkylene glycol polymer and/or at least one alkylene glycol copolymer in which the alkylene(s) has (have) from 2 to 6 carbon atoms, for trapping ruthenium present in a gaseous effluent.

2. Use according to Claim 1, in which the alkylene glycol polymer is selected from the group consisting of polyethylene glycol, polypropylene glycol, polybutylene glycol, or a blend of these.

3. Use according to Claim 1, in which the alkylene glycol copolymer is a copolymer consisting of polymers selected from the group consisting of polyethylene glycol, polypropylene glycol and polybutylene glycol or a blend of these.

4. Use according to Claim 1, in which the alkylene glycol copolymer is a copolymer based on ethylene glycol, propylene glycol and butylene glycol.

5. Use according to Claim 1 or 3, in which the alkylene glycol copolymer is of the following formula (I): 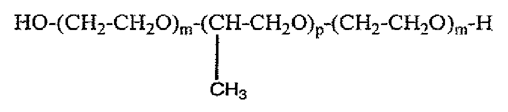 in which m and p are integers such that, independently, 1 ≤ m ≤ 8 and 3 ≤ p ≤ 12.

6. Use according to Claim 1 or 5, in which the alkylene glycol copolymer is an ethylene glycol/propylene glycol copolymer.

7. Use according to Claim 1, in which the aqueous solution or slurry is placed on a substrate made of fibres.

8. Use according to Claim 7, in which the substrate consists of a glass wool or a stainless steel wool.

9. Use according to Claim 7, in which the alkylene glycol polymer or the alkylene glycol copolymer is placed on the said substrate by dipping the substrate into an aqueous solution of the said polymer or of the said copolymer.

10. Use according to Claim 1, in which the alkylene glycol polymer or alkylene glycol copolymer has hydroxyl end groups.

11. Ruthenium-trapping cartridge, the said cartridge comprising a substrate on which an alkylene glycol polymer or an alkylene glycol copolymer is placed, in which the alkylene(s) has (have) from 2 to 6 carbon atoms.

12. Cartridge according to Claim 11, in which the alkylene glycol polymer is selected from the group consisting of polyethylene glycol, polypropylene glycol and polybutylene glycol.

13. Cartridge according to Claim 11, in which the alkylene glycol copolymer is a copolymer consisting of polymers selected from the group consisting of polyethylene glycol, polypropylene glycol and polybutylene glycol.

14. Cartridge according to Claim 11, in which the alkylene glycol copolymer is a copolymer based on ethylene glycol, propylene glycol and butylene glycol.

15. Cartridge according to Claim 11 or 12, in which the alkylene glycol copolymer is of the following formula (I): 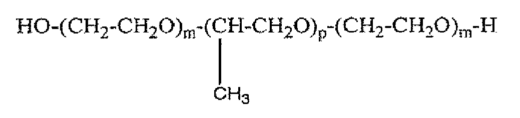 in which m and p are integers such that, independently, 1 ≤ m ≤ 8 and 3 ≤ p ≤ 12.

16. Cartridge according to Claim 11 or 15, in which the alkylene glycol copolymer is an ethylene glycol/propylene glycol copolymer.

17. Cartridge according to Claim 11, in which the substrate consists of fibres.

18. Cartridge according to Claim 11, in which the substrate consists of a glass wool or a stainless steel wool.

19. Cartridge according to Claim 11, 17 or 18, in which the said alkylene glycol polymer or the said alkylene glycol copolymer is placed on the said surface by dipping the substrate into an aqueous solution of the said polymer or of the said copolymer.

20. Cartridge according to Claim 11, the said cartridge furthermore including a structure that supports the substrate on which the alkylene glycol polymer or copolymer is placed.

21. Cartridge according to Claim 11, comprising:
- the substrate on which the alkylene glycol polymer or copolymer is placed, the said surface being in the form of glass wool or stainless steel wool;
- a structure supporting the said substrate on which the alkylene glycol polymer or copolymer has been placed; and
- peripheral means for sealing the said cartridge, making it necessary for the gaseous effluent to pass through the said substrate.

22. Use according to Claim 1, in which the aqueous solution is added to the scrubbing water of a gas scrubbing unit.

## Patentansprüche

1. Anwendung einer Lösung oder einer wässrigen Paste mit wenigstens einem Alkylenglycol-Polymer und/oder wenigstens einem Alkylene-Glycol-Copolymer, wobei das oder die Alkylen(e) 2 bis 6 Kohlenstoffatome hat (haben), um das in einem Abgas enthaltene Ruthenium einzufangen.

2. Anwendung nach Anspruch 1, bei der das Alkylenglycol-Polymer ausgewählt wird aus der Gruppe, die das Polyethylenglycol, das Polypropylenglycol, das Polybutylenglycol oder eine Mischung aus diesen umfasst.

3. Anwendung nach Anspruch 1, bei der das Alkylene-Glycol-Copolymer ein Copolymer ist, das durch Polymere gebildet wird, die aus der Gruppe ausgewählt werden, die das Polyethylenglycol, das Polypropylenglycol, das Polybutylenglycol oder eine Mischung aus diesen umfasst.

4. Anwendung nach Anspruch 1, bei der das Alkylene-Glycol-Copolymer ein Copolymer auf der Basis von Ethylen, Propylen und Butylenglycol ist.

5. Anwendung nach Anspruch 1 oder 3, bei der das Alkylene-Glycol-Copolymer die folgende Formel (I) hat: 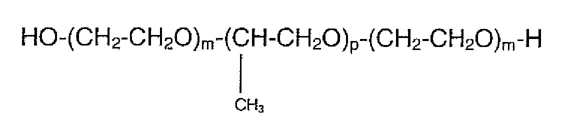 bei der m und p ganze Zahlen wie, unabhängig, 1 ≤ m ≤ 8 und 3 ≤ p ≤ 12 sind.

6. Anwendung nach Anspruch 1 oder 5, bei der das Alkyfene-Glycol-Copolymer ein Copolymer aus Ethylenglycol und Propylenglycol ist.

7. Anwendung nach Anspruch 1, bei der die Lösung oder wässrige Paste auf ein durch Fasern gebildetes Substrat aufgebracht wird.

8. Anwendung nach Anspruch 7, bei der das Substrat durch eine Glaswolle oder eine Inoxwolle gebildet wird.

9. Anwendung nach Anspruch 7, bei der das Alkylenglycol-Polymer oder das Alkylene-Glycol-Copolymer auf das genannte Substrat aufgebracht wird durch Eintauchen des Substrats in eine wässrige Lösung des genannten Polymers oder des genannten Copolymers.

10. Anwendung nach Anspruch 1, bei der das Alkylenglycol-Polymer oder das Alkylene-Glycol-Copolymer Hydroxylendungen aufweisen.

11. Patrone zum Einfangen von Ruthenium, wobei die genannte Patrone ein Substrat umfasst, auf das ein Alkylenglycol-Polymer oder ein Alkylene-Glycol-Copolymer aufgebracht ist, dessen Alkylen(e) 2 bis 6 Kohlenstoffatome hat (haben).

12. Patrone nach Anspruch 11, bei der das Alkylenglycol-Polymer ausgewählt wird aus der Gruppe, die das Polyethylenglycol, das Polypropylenglycol, das Polybutylenglycol umfasst.

13. Patrone nach Anspruch 11, bei der das Alkylene-Glycol-Copolymer ein Copolymer ist, das durch Polymere gebildet wird, die ausgewählt werden aus der Gruppe, die das Polyethylenglycol, das Polypropylenglycol, das Polybutylenglycol umfasst.

14. Patrone nach Anspruch 11, bei der das Alkylene-Glycol-Copolymer ein Copolymer auf der Basis von Ethylen, Propylen und Butylenglycol ist.

15. Patrone nach Anspruch 11 oder 12, bei der das Alkylene-Glycol-Copolymer die folgende Formel (I) hat: 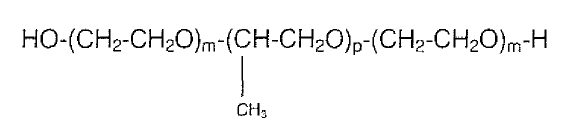 bei der m und p ganze Zahlen wie, unabhängig, 1 ≤ m ≤ 8 und 3 ≤ p ≤ 12 sind.

16. Patrone nach Anspruch 11 oder 15, bei der das Alkylene-Glycol-Copolymer ein Copolymer aus Ethylenglycol und Propylenglycol ist.

17. Patrone nach Anspruch 11, bei der das Substrat durch Fasern gebildet wird.

18. Patrone nach Anspruch 11, bei der das Substrat durch eine Glaswolle oder eine Inoxwolle gebildet wird.

19. Patrone nach Anspruch 11, 17 oder 18, bei der das genannte Alkylenglycol-Polymer oder Alkylene-Glycol-Copolymer auf die genannte Oberfläche aufgebracht wird durch Eintauchen des Substrats in eine wässrige Lösung des genannten Polymers oder des genannten Copolymers.

20. Patrone nach Anspruch 11, wobei die genannte Patrone außerdem eine Struktur umfasst, die das Substrat trägt, auf welches das Alkylenglycol-Polymer oder Alkylene-Glycol-Copolymer aufgebracht ist.

21. Patrone nach Anspruch 11, umfassend:
- das Substrat, auf welches das Alkylenglycol-Polymer oder Alkylene-Glycol-Copolymer aufgebracht ist, wobei die genannte Oberfläche diejenige von Glas- oder Inoxwolle ist,
- eine das genannte Substrat tragende Struktur, auf der das Alkylenglycol-Polymer oder Alkylene-Glycol-Copolymer aufgebracht ist, und
- periphere Abdichtungseinrichtungen der genannten Patrone, um die Abgase zu zwingen, das genannte Substrat zu durchqueren.

22. Anwendung nach Anspruch 1, bei der die wässrige Lösung dem Waschwasser einer Gaswaschanlage beigemischt ist.
